# EUROPEAN PATENT APPLICATION

(11) **EP 2 432 224 A1**
(43) Date of publication of application: **21.03.2012**
(21) Application number: 10177142.6
(22) Date of filing: 16.09.2010
(51) Int. Cl.: H04N 7/24, H04N 5/00, G06F 9/50, H04N 7/52

(54) **Multimedia system**

(71) Applicant: Harman Becker Automotive Systems GmbH, 76307 Karlsbad (DE)
(72) Inventor: Hess, Wolfgang, 76307, Karlsbad (DE)
(74) Representative: Patentanwälte Westphal, Mussgnug & Partner

(57) **Abstract**

A head unit of a multimedia system is disclosed. In accordance with one example of the invention the head unit comprises: an interface providing an input audio data stream; an interface configured to receive an output audio data stream; a central processing unit; a graphic processing unit; and a audio processing unit receiving the input audio data stream and providing the processed output audio data stream, wherein the audio processing unit resides solely on the graphic processing unit or is distributed across the graphic processing unit and the central processing unit.

## Description

### TECHNICAL FIELD

The present invention relates to an multimedia system, in particular to a head unit of an in-car infotainment system.

### BACKGROUND

A "head unit" is a component of a multimedia system in particular in a vehicle which provides a hardware interface for the various components of an electronic media system. The following description concentrates on automotive applications. However, the use of multimedia systems is not limited to the automotive sector.

The head unit may form the centerpiece of the car's sound system and is typically located in the center of the dashboard. Head units give the user control over the vehicle's entertainment media: AM/FM radio, satellite radio, CDs/DVDs, cassette tapes (although these are now uncommon), MP3, GPS navigation, Bluetooth, telephone, media player, etc. Many head units afford the user precise control over detailed audio functions such as volume, band, frequency, speaker balance, speaker fade, bass, treble, equalizer, surround sound settings and so on.

Several car manufacturers are integrating more advanced systems into vehicle's head units such that they can control vehicular functions such as navigation and offer vehicle data such as trouble warnings and odometer information. A head unit may thus serve as a secondary instrument panel.

The main board (also referred to as main circuit board) of a head unit may carry SDRAM (Synchronous Dynamic Random Access Memory) devices and a CPU (Central Processing Unit) similar to a main board of a PC. Further components typically are digital signal processors (DSPs) and FPGAs (Field Programmable Gate Array) for decoding MPEG-coded (MPEG: short for "Moving Picture Experts Group" who set the MPEG standard for coding audio and video) audio and video data, processing audio data (e.g. applying digital filters) and processing graphic data (e.g. generating 2D and 3D graphic effects). A Global Positioning System (GPS) receiver may also be included in the head unit in order to provide the function of a navigation system. The speedometer and other sensors may be connected to the head unit via a CAN (Controller-Area Network) bus interface. Further audio and multimedia components (CD (compact disc) changer, audio amplifier, telephone, rear seat displays, etc.) are typically connected to the head unit using a MOST (Media Oriented Systems Transport) bus.

As the head unit hardware becomes more and more complex the hardware design efforts and the manufacturing costs increase. Consequently, there is a need for a head unit requiring a less complicated hardware structure without degrading the overall performance of the head unit.

### SUMMARY

A head unit of a multimedia system is disclosed. In accordance with one example of the invention the head unit comprises: an interface providing an input audio data stream; an interface configured to receive an output audio data stream; a central processing unit; a graphic processing unit; and a audio processing unit receiving the input audio data stream and providing the processed output audio data stream, in which the audio processing unit resides solely on the graphic processing unit or is distributed across the graphic processing unit and the central processing unit.

### BRIEF DESCRIPTION OF THE DRAWINGS

The invention can be better understood with reference to the following drawings and description. The components in the figures are not necessarily to scale, instead emphasis being placed upon illustrating the principles of the invention. Moreover, in the figures, like reference numerals designate corresponding parts. In the drawings:
- FIG. 1: illustrates a head unit of a car infotainment system connected with various external devices via a MOST bus;
- Fig. 2: illustrates by means of a simplified block diagram the basic components of currently used head units including a CPU, a DSP and a FPGA;
- FIG. 3: illustrates by means of a simplified block diagram the basic components of a head unit in accordance with the present invention including in particular a CPU and a GPU; and
- FIG. 4: illustrates a head unit similar to FIG. 3 with an additional load-balancing unit.

### DETAILED DESCRIPTION

A GPU (Graphic Processing Unit) is a dedicated processor designed to perform floating-point calculations that are fundamental in 2D and 3D graphics. The GPU has a programmable rendering pipeline, which takes care of the vector and matrix transformations and lighting calculations needed, usually to display the 2D projection of the data to the screen.

General-purpose computing on graphics processing units (referred to as GPGPU) is the technique of using a GPU, which typically handles computation only for computer graphics, to perform computation in applications traditionally handled by the CPU. It is made possible by adding programmable stages and higher precision arithmetic to the rendering pipelines, which allows software developers to use stream processing on non-graphics data. GPU functionality has, traditionally, been very limited. In fact, for many years the GPU was only used to accelerate certain parts of the graphics pipeline. Some improvements were needed before GPGPU became feasible.

Programmable vertex and fragment shaders were added to the graphics pipeline to enable game programmers to generate even more realistic effects. Vertex shaders allow the programmer to alter per-vertex attributes, such as position, colour, texture coordinates, and normal vector. Fragment shaders are used to calculate the colour of a fragment, or per-pixel. Programmable fragment shaders allow the programmer to substitute, for example, a lighting model other than those provided by default by the graphics card, typically simple Gouraud shading. Shaders have enabled graphics programmers to create lens effects, displacement mapping, and depth of field. Summarizing the above, graphic processing units (GPU), which are available today, are generally well suited for stream processing (see, for example, J.D. Owens, M. Houston, D. Luebke, S. Green, J.E. Stone, J.C. Phillips: GPU Computing, in: Proceedings of the IEEE, Vol. 96, No. 5, pp. 879-899, May 2008).

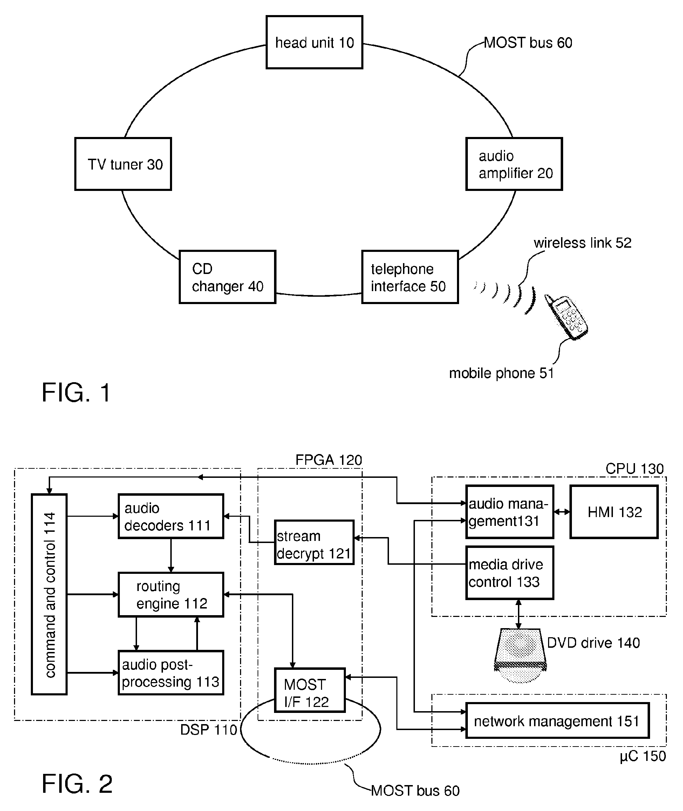

FIG. 1 illustrates the basic structure of a modern automotive multimedia system (infotainment system) as it is currently employed by many manufacturers. Several separate components composing the multimedia system are connected via a bus that may be, for example, a MOST bus (Media Oriented Systems Transport bus), which is very common in automotive applications. The above mentioned components are, for example, the head unit 10 (which may serve as a bus master device), an audio amplifier 20, a television tuner 30, a CD changer 40, a telephone interface 50 (for establishing a wireless link, e.g. a Bluetooth link, to a mobile phone 51), etc. It should be noted that this list is not complete and may include various other components. Further, the mentioned components are not inevitably required in a multimedia system and have been included in the system of FIG. 1 as illustrative examples.

FIG. 2 illustrates a typical example of the hardware structure which may be used to implement the head unit 10 of FIG. 1. The illustrated components, namely a digital signal processor (DSP) 110, a field programmable gate array (FPGA) 120, a microcontroller (µC) 150, and a central processing unit (CPU) 130 are typically arranged on a main board of the head unit 10. However, the functionality provided by the FPGA 120 and by the microcontroller may be also be included in the CPU 130 using appropriate software.

The CPU 120 is configured to handle the user-machine communication. This function is represented by the human-machine interface (HMI) 132 in the example of FIG. 2. The HMI 132 is coupled to an audio management unit 131 which may also be implemented as software in the CPU 130. The audio management unit 121 controls the audio settings of the audio subsystem of the overall multimedia system such as, for example, user definable equalizer settings (representing, for example, different acoustic situations), surround sound settings, bass, treble, etc. The CPU 130 may further include a (software implemented) media driver controller 133 which forms an interface to a non-volatile data storage medium such as, for example, a DVD (digital versatile disc) drive 140, a CD drive, or a flash memory device, to name just a few examples. The media device controller 133 provides data streams representing audio and/or video data, in particular audio and video streams coded in accordance with the MPEG standard (e.g. AC-3, AAC and MP3 coded audio streams). The data streams may be encrypted such as, for example, in accordance with the Content Scrambling System (CSS) commonly used in DVDs. However, other digital rights management (DRM) systems may be used in practice (e.g. FairPlay for encrypting AAC-coded audio files, AAC: short for Advanced Audio Coding).

The audio processing itself usually can not be performed by the CPU which is not designed to process a huge amount of numerical calculations necessary to process digital audio data. Thus, the audio processing is typically "outsourced" to a dedicated digital signal processor (DSP) optimised for audio data processing. The DSP 110 includes a (software implemented) audio decoder unit 111 receiving a digital audio stream from the media drive controller 133 managed by the CPU 130. If the audio stream is encrypted, a stream decryption unit 121 (implemented, for example, in the FPGA 120) coupled between the audio decoder unit 111 and the media device controller 133 may provide for data decryption. The decoded (and, when necessary, sample-rate converted) audio data may be made available to an audio post-processing unit 113 which provides a number of audio processing algorithms ranging, for example, from digital equalizing filters to complex sound field processing algorithms for creating a virtual concert hall impression or the like. The audio post-processing unit 113 provides the final digital audio signal which is forwarded to an audio power amplifier, for example, via the MOST bus 60 (cf. FIG. 1).

The signal flow within the DSP 110 is managed by a (software implemented) unit denoted as routing engine 112 in FIG. 2. The routing engine 112 is configured to forward audio stream data from the audio decoder unit 111 to the audio post processing unit 113 and further to forward the post-processed audio data from the post-processing unit 113 to a MOST bus interface 112 (implemented in the FPGA 120 in the present example) so as to be forwarded via the bus 60 to an audio data sink such as, for example, the audio amplifier 20 (see FIG. 1). In order to process audio data originating from a different source than the storage device (e.g. DVD drive 140) coupled to the media device controller 133, the routing engine 112 may be further configured to receive audio data from the MOST bus via interface 122 and forward the received audio data to the post-processing unit 113. The processed audio data may then be sent back (using again the routing engine 112) to the MOST bus 60 via interface 122 and further to the audio amplifier 20 as already mentioned above.

The operation of the audio decoder unit 111, the routing engine 112, and the post processing unit 113 is controlled and managed by a command and control logic 114 implemented in the DSP 110. The control logic 114 may be implemented as software executed by the DSP, coupled to the audio decoder unit 111, the routing engine 112 and the post processing unit 113, and further receive high-level control commands from the audio management unit 131 included in the CPU 130.

A network management unit 151 for managing the data transfer over the MOST bus 60 may be implemented in a separate microcontroller 150 and coupled to the MOST interface 122. However, the network management unit 151 could also be included in the CPU 140.

Present automotive multimedia systems (also called "infotainment systems") are configured to display information on large-area flat screens to some extent including computationally complex 3D graphic effects. High definition (HD) video systems are going to find their way into automotive applications thereby increasing the required graphic computation power. Thus, head units may include high-performance graphic processing units (GPUs) to manage the graphic processing tasks and thus to reduce the CPU load.

The stream processing capability of modern GPUs may be advantageously used for the processing of audio streams.

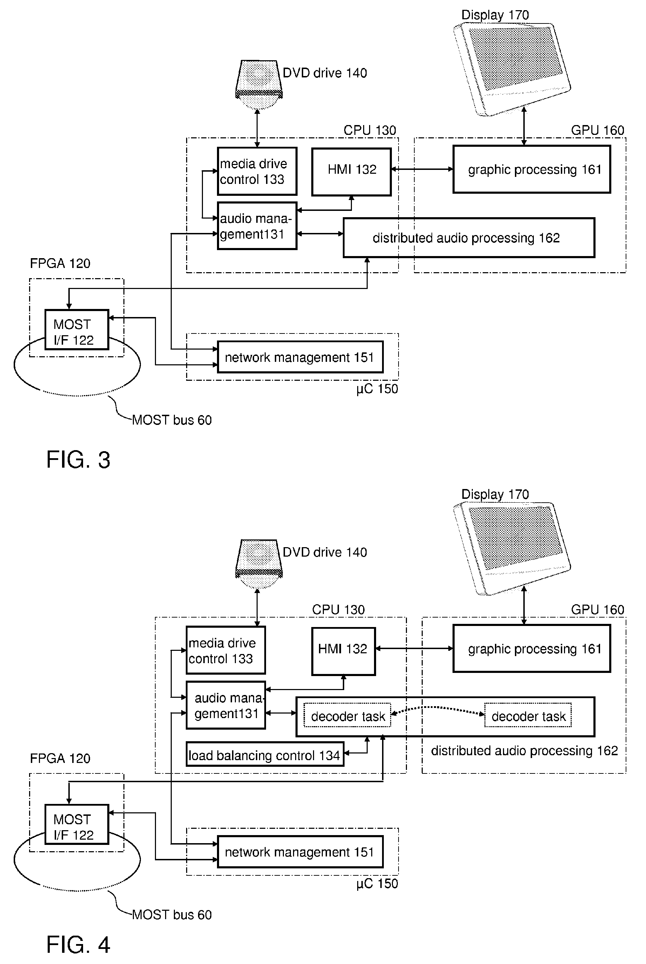

FIG. 3 illustrates a head unit 10 for use in an automotive multimedia system (cf. FIG. 1). The system comprises a CPU 130, a GPU 160, and optionally a microcontroller 150 and a FPGA 120. The functionality of the latter two may be alternatively taken over by the GPU 160 and/or by the CPU 130.

In the example of FIG. 3, the MOST interface 122 is implemented using the FPGA 120 and the network management unit 151 is implemented using the microcontroller 150 analogously to the example of FIG. 2. The CPU 120 implements similar functions as in the example of FIG. 2, in particular the media drive controller 133, the audio management unit 131, and the HMI 132. As in the example of FIG. 2 the audio management unit 131 is coupled to the HMI 132 as well as to the network management unit 151 (in order to allow sending and receiving audio control commands, e.g. user volume settings, via the network).

Naturally, the graphic processing (unit 161) resides (i.e. is implemented) in the GPU 150 which is coupled to the CPU 120 via a data bus. According to one example of the invention the system comprises an audio processing unit 162 which is mainly implemented using software executed solely by the GPU 162 or, alternatively, the audio processing is distributed over CPU 120 and GPU 162. However, the main calculation power is provided by the GPU 160 and thus a separate DSP 110 is not needed any more resulting in a less complex hardware structure of the head unit 10. As illustrated in the previous example (FIG. 2), some signal processing may optionally be outsourced to the FPGA (i.e. the stream decryption in the example of FIG. 2) or directly included in the (optionally distributed) signal processing unit 162.

In accordance with the present invention a programmable GPU 160 is required. Fur this purpose some manufacturers have developed standard architectures such as CUDA (short for "Compute Unified Device Architecture") by NVIDIA Corp. When using CPU 130 and GPU 160 for distributed audio processing, synchronisation is necessary. Such synchronization ensures that only valid data is exchanged between CPU and GPU. For this purpose, different threads may be synchronized using semaphores (i.e. protected variables or abstract data types that constitute a classic method of controlling access by several threads to a common resource in a parallel programming environment), mutex algorithms or the like. For example, infinite impulse response (IIR) filters may (due to the feedback loop) be implemented on the CPU whereas finite impulse response (FIR) filters may be distributed to parallel threads and thus advantageously be implemented on the GPU. In this case a synchronization mechanism may be necessary to define which processor (CPU or GPU) gets valid input data at a certain time. IIR and FIR filters are used to realize various functions of the head unit (e.g. equalizing, surround sound processing, etc.).

Using a head unit as illustrated in FIG. 3, a load balancing can be implemented by using an appropriate thread scheduling. In particular, audio algorithms including algorithms that have to be executed step by step in a sequential manner are advantageously implemented in the CPU 130 whereas algorithms which can be parallelized (e.g. FIR filters, delay lines, decoder algorithms, etc.) are more efficiently processed by the GPU 160. In order to achieve the above-mentioned load balancing some audio processing algorithms (tasks, e.g. delay lines or decoder algorithms such as MP3 or AC3) may be implemented on the GPU 160 and on the CPU 130 as well. In case the GPU 160 is loaded with extensive graphic processing (graphic processing unit 161) the audio processing may be redistributed such that some audio processing algorithms initially executed by the GPU 160 are "moved" to the CPU 130. During a transition time (when redistributing tasks for load balancing) the respective algorithms is executed by both processors (GPU 160 and CPU 130) both performing the same operations. Subsequently, a cross-fading is performed to the processor with lower load (e.g. CPU) and the respective task is stopped in the processor with higher load (e.g. GPU) in order to free resources. During the transition time the parallel tasks (performing the same function) have to be synchronized, too.

The communication between the GPU 160 and the CPU 130 as well as the load balancing may be managed and controlled by a load-balancing controller 134 which may be executed by the CPU 130. The load-balancing controller 134 residing on the CPU 130 is illustrated in FIG. 4 which includes all components of the example of FIG. 3 and additionally the load-balancing controller 134.

The load balancing-controller "knows" the tasks executed by the CPU 130 and the GPU 160 and is configured to estimate the respective processor loads (as a fraction of the respective maximum processor load) and to move tasks from one processor to the other in order to free resources on one processor when necessary (e.g. if the processor load exceeds a given threshold). A proven bus system may be used for communication and data exchange between GPU 160 and CPU 130 such as, for example, the Peripheral Component Interconnect Express (PCIe) bus.

Although the present invention and its advantages have been described in detail, it should be understood that various changes, substitutions, and alterations can be made herein without departing from the spirit and scope of the invention as defined by the appended claims. For example, it will be readily understood by those skilled in the art that some function units may be alternatively be implemented as hardware or software residing on different processors while remaining within the scope of the present invention.

Moreover, the scope of the present application is not intended to be limited to the particular embodiments of the process, machine, manufacture, composition of matter, means, methods, and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A head unit of a multimedia system comprising:
an interface providing an input audio data stream;
an interface configured to receive an output audio data stream;
a central processing unit;
a graphic processing unit; and
an audio processing unit receiving the input audio data stream and providing the processed output audio data stream,
the audio processing unit residing solely on the graphic processing unit or is distributed across the graphic processing unit and the central processing unit.

2. The head unit of claim 1 further comprising a load balancing controller residing on the central processing unit, the load balancing controller being configured to provide a load balancing between the central processing unit and the graphic processing unit.

3. The head unit of claim 1 or 2 further comprising a field programmable gate array, a stream decryption unit residing on the field programmable gate array for decrypting the input audio data stream.

4. The head unit of claim 1 or 2 further comprising a stream decryption unit residing on the graphic processing unit for decrypting the input audio data stream.

5. The head unit of one of the claims 1 to 4 further comprising a network interface and a network management unit, the network interface and the network management unit being configured to send and receive data to and, respectively, from a data bus.

6. The head unit of claim 5 wherein the network interface resides on a field programmable gate array and the network management unit resides on a microcontroller.

7. The head unit of claim 2, in which
the audio processing unit is distributed across the graphic processing unit and the central processing unit and
the load balancing controller is further configured to move the execution of at least one audio processing algorithm performed by the audio processing unit from the graphic processing unit to the central processing unit or vice versa.

8. The head unit of claim 7, in which the load balancing controller is configured to estimate the processor load of the graphic processing unit and the central processing unit and to move the execution of at least one audio processing algorithm to the other processing unit if the processor load of one processing unit exceeds a given threshold.

9. The head unit of claim 7 or 8, in which during a transition time, when moving the execution of an audio algorithm between processing units, the audio algorithm is executed by both processing units in parallel and synchronously.
